# EUROPÄISCHE PATENTANMELDUNG

(11) **EP 1 315 120 A1**
(43) Veröffentlichungstag der Anmeldung: **28.05.2003**
(21) Anmeldenummer: 01128037.7
(22) Anmeldetag: 26.11.2001
(51) Int. Cl.: G06K 11/18

(54) **Stifteingabesystem**

(71) Anmelder: SIEMENS AKTIENGESELLSCHAFT, 80333 München (DE)
(72) Erfinder: Seytter, Fritz, 81541 Muenchen (DE)

(57) **Zusammenfassung**

Die Erfindung betrifft ein Verfahren zur Stifteingabe auf einer Oberfläche (SO), bei dem der Bewegungsablauf eines Stiftes (ST) als Grafik auf einem Durchsicht-Display beziehungsweise Durchsicht-Mikrodisplay (MD) dargestellt wird, und bei dem Mittel vorgesehen sind, wodurch der Stift (ST) und die Grafik im Display (MD) ortsmäßig gekoppelt sind.

## Beschreibung

Die Erfindung betrifft ein Verfahren zur Stifteingabe auf einer Oberfläche, bei dem der Bewegungsablauf des Stiftes als Grafik auf einem Display dargestellt wird.

Bei miniaturisierten Endgeräten der Informationstechnik besteht das Bedürfnis, trotz der kleinen, unauffälligen und leichten Geräte, einen großen, grafischen Bildschirm zur Verfügung zu haben. Weiter will der Benutzer Daten auf eine möglichst natürliche Weise eingeben können. Zukünftige Endgeräte könnten daher mit einem Durchsicht-Mikrodisplay ausgestattet sein, bei dem grafische Informationen über die natürliche Umgebung projiziert werden. Solche Mikrodisplays werden beispielsweise von "The MicroDisplay Corporation" angeboten. Eine grafische Stifteingabe ist auf einem solchen projizierten Bildschirm schwer zu realisieren.

Es sind Technologien zur Stifteingabe auf einer beliebigen Oberfläche bekannt, bei denen einerseits aktive Stifte mit einer eingebauten Bewegungserkennung (siehe beispielsweise www.anoto.com oder www.com.n.com) verwendet werden, oder bei denen andrerseits durch Peiltechniken (siehe beispielsweise www.virtual-ink.com) eine Positionserkennung eines passiven Stiftes relativ zu einem Erfassungsgerät erfolgt. Bei diesen aktiven und auch passiven Stiften erfolgt eine Datenübertragung beispielsweise zu einem Notebook, auf dem der erfasste Bewegungsablauf grafisch, beispielsweise durch eine Linie, dargestellt wird.

Der Erfindung liegt die Aufgabe zugrunde, ein Verfahren zur Stifteingabe insbesondere für ein Durchsicht-Mikrodisplay anzugeben, welches dem Benutzer eine natürliche Handhabung erlaubt.

Diese Aufgabe wird erfindungsgemäß durch die im Patentanspruch angegebenen Merkmale gelöst.

Ein Vorteil des erfindungsgemäßen Verfahrens liegt darin, dass die Eingabe für andere Personen nicht einsehbar oder abhörbar ist.

Im Folgenden wird die Erfindung anhand eines in der Zeichnung dargestellten Ausführungsbeispieles beschrieben. Dabei zeigen
Figur 1 die Verwendung eines Mikrodisplays in Zusammenhang mit einem Headset, und
Figur 2 das erfindungsgemäße Verfahren zur Stifteingabe.

Das erfindungsgemäße Verfahren zur Stifteingabe erlaubt es, die ausgewertete Bewegung beziehungsweise den Bewegungsablauf des Stiftes derart auf einem Durchsicht-Mikrodisplay darzustellen, so dass der visuelle Eindruck entsteht, als würde der Stift tatsächlich schreiben. Tatsächlich bewegt sich der Stift auf der jeweiligen Unterlage beziehungsweise Oberfläche, ohne dort eine Spur zu hinterlassen. Dargestellt wird sozusagen der Bewegungsablauf durch eine sogenannte "virtuelle Tinte", die wie bei einem realen Kugelschreiber aus der Spitze des Stiftes herausfließt.

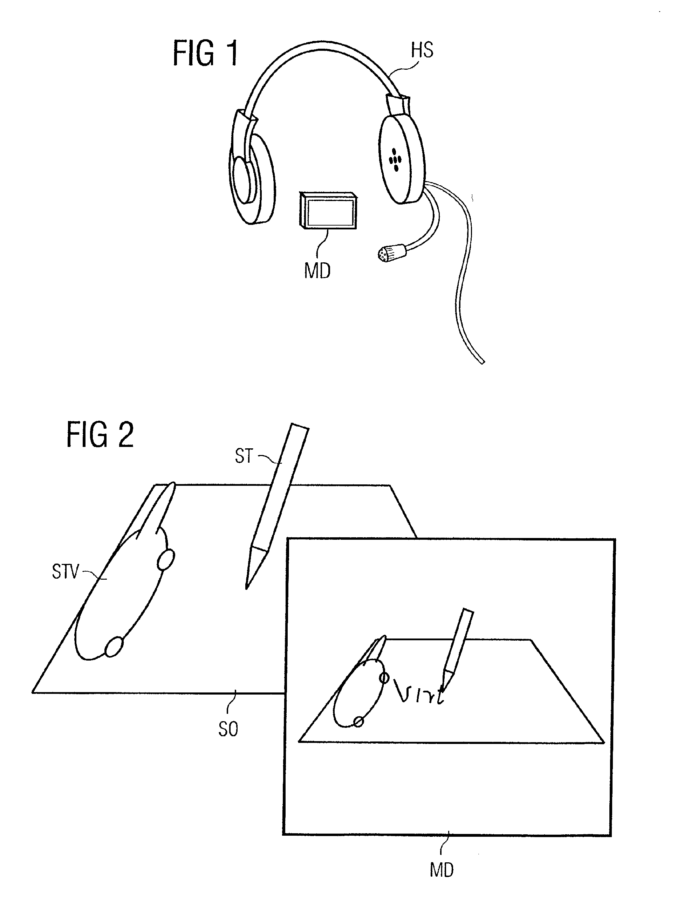

In Figur 1 ist ein Mikrodisplay MD dargestellt, das beispielsweise an einem Headset HS befestigt ist. Wenn das Mikrodisplay MD als Durchsicht-Mikrodisplay ausgebildet ist, so sieht der Benutzer des Headsets HS über den vor ihm befindlichen realen Hintergrund das auf dem Mikrodisplay MD projizierte beziehungsweise dargestellt Bild. Der Benutzer sieht beispielsweise einen auf dem Display MD eingeblendeten Text projeziert über den natürlichen Hintergrund.

In Figur 2 ist eine Schreiboberfläche SO dargestellt, auf der sich ein Stiftverfolger STV befindet, der die Bewegung eines Stiftes ST erfasst. Die Schreiboberfläche SO bildet sozusager den Erfassungsbereich, auf dem der Bewegungsablauf des Stiftes ST ausgewertet werden kann.

Bei dem erfindungsgemäßen Verfahren sind Mittel vorgesehen, wodurch im Durchsicht-Mikrodisplay MD eine ortsmäßige Kopplung von Stift ST und der von ihm erzeugten Grafik erfolgt.

Auf dem Durchsicht-Display beziehungsweise Durchsicht-Mikrodisplay MD wird die über den Stift ST eingegebene Grafik dargestellt. Es ist hierbei zu beachten, dass die Grafik als Projektion auf dem Mikrodisplay MD erscheint, während diese Grafik auf der realen Schreiboberfläche SO nicht erkennbar ist. Nur der Benutzer beziehungsweise der Betrachter, der das ganze Szenario, das heisst Projektionsbild auf dem Mikrodisplay MD und den realen Stift ST, sieht sozusagen einen schreibenden Stift, welcher eine virtuelle Tintenspur nach sich zieht.

Die Erfindung besteht darin, die erkannte Bewegung des Stiftes so auf dem Mikrodisplay MD sichtbar zu machen, so dass der virtuelle Eindruck entsteht, als würde der Stift schreiben, obwohl er sich, ohne eine Spur zu hinterlassen, auf der Unterlage bewegt.

Zur Durchführung der Erfindung wird das in seiner Bewegung an das Auge gekoppelte Mikrodisplay MD kalibriert, indem der Benutzer beispielsweise einen oder mehrere im Display MD sichtbare Punkte antippt. Dieses Antippen geschieht natürlich mit dem Stift ST auf der Schreiboberfläche SO, das heisst auf der Projektion der Punkte auf der Schreiboberfläche SO. Eine Kompensation der Kopfbewegung bewirkt dann, dass die virtuelle Schrift oder auch Strichzeichnung für den Benutzer, der ja die Schreiboberfläche SO durch das Mikrodisplay MD sieht, an der gleichen Stelle der Schreiboberfläche SO bleibt, während er weiter schreiben oder zeichnen kann, und die virtuelle Tinte immer aus der Spitze des Stiftes ST fließt.

Der Benutzer sieht im Display MD eine Kombination aus dem realen Stift und der virtuellen Tinte, die ortsmäßig gekoppelt sind. Hierdurch entsteht der Eindruck eines schreibenden Stiftes ST.

Ein aussenstehender Beobachter kann nur die Bewegung des Stiftes verfolgen, würde aber weder die entstehende Graphik beziehungsweise Schrift, noch eine entstehende Zeichnung sehen.

## Patentansprüche

1. Verfahren zur Stifteingabe auf einer Oberfläche (SO),
- bei dem der Bewegungsablauf eines Stiftes (ST) als Grafik auf einem Durchsicht-Display beziehungsweise Durchsicht-Mikrodisplay (MD) dargestellt wird, und
- bei dem Mittel vorgesehen sind, wodurch der Stift (ST) und die Grafik im Display (MD) ortsmäßig gekoppelt sind.
